# EUROPÄISCHE PATENTSCHRIFT

(11) **EP 0 799 145 B1**
(45) Veröffentlichungstag und Bekanntmachung des Hinweises auf die Patenterteilung: **26.08.1998**
(21) Anmeldenummer: 95942641.2
(22) Anmeldetag: 22.12.1995
(51) Int. Cl.: B62M 25/08, B62M 9/12

(54) **GANGSCHALTUNG FÜR FAHRRÄDER**
GEAR-CHANGING MECHANISM FOR A BICYCLE
MECANISME DE CHANGEMENT DE VITESSE POUR BICYCLETTE

(30) Priorität: 22.12.1994 DE 4446013; 16.05.1995 DE 19517411; 23.10.1995 DE 19539327
(43) Veröffentlichungstag der Anmeldung: 08.10.1997
(73) Patentinhaber: Wendler, Jochen, 71573 Allmersbach (DE)
(72) Erfinder: Wendler, Jochen, 71573 Allmersbach (DE)
(74) Vertreter: Schuster, Gregor, Dipl.-Ing.
(86) Internationale Anmeldenummer: DE9501845
(87) Internationale Veröffentlichungsnummer: WO9619376

(56) Entgegenhaltungen:
- FR-A- 2 154 018

## Beschreibung

### Stand der Technik

Die Erfindung geht aus von einer Gangschaltung für Fahrräder nach der Gattung des Oberbegriffes des Anspruchs 1.

Bekannte Kettenschalteinrichtungen weisen einen meist mit einem Parallelogrammversteller arbeitenden Umwerfer auf, der bei der Gangwahl gegen die Kraft einer Feder durch den Drahtzug eines Bowdenzugs verstellbar ist. Der Bowdenzug überträgt die Kraft von der durch den Fahrradfahrer betätigbaren Bedienvorrichtung auf die in der Nähe der Zahnkränze angeordnete Kettenschalteinrichtung. Der abschnittsweise in einem Schlauch geführte Drahtzug ragt an dem mit der Kettenschalteinrichtung verbundenen Ende aus dem Schlauch heraus und ist in dessen Bereich gegen Schmutz und Feuchtigkeit nicht geschützt. Dies ist insbesondere deshalb von Nachteil, da dieser Abschnitt des Drahtzugs beim Fahrrad in geringem Abstand zur Fahrbahn angeordnet ist, so daß sich beim Fahren auf nicht befestigten, schlammigen oder schmutzigen Wegen Schmutz am Drahtzug festsetzen kann. Dieser verschmutzte Abschnitt des Drahtzugs kann sich nicht mehr ungehindert in den Schlauch hineinbewegen. Die Folge ist, daß sich die Schaltung nur noch mit großer Kraft oder gar nicht mehr betätigten läßt. Besonders an der Bedienvorrichtung kann zudem Feuchtigkeit in den Schlauch eindringen und zur Korrosion des Drahtzugs führen. Als nachteilig erweist sich außerdem, daß der Drahtzug so geführt sein muß, daß sich für den Schlauch keine starken Krümmungen ergeben, da die ohnehin nicht unerhebeliche Reibung zwischen Schlauch und Drahtzug dadurch zu groß werden könnte und für die Betätigung der Gangschaltung zu große Kräfte aufgebracht werden müßten, abgesehen davon, daß der Drahtzug eine starke Abnutzung erfahren würde. Entsprechend sind die Möglichkeiten, den Bowdenzug von der Lenkstange zur Kettenschalteinrichtung zu führen eingeschränkt.

Es ist auch bekannt, einen Drehgriff als Bedienvorrichtung zu verwenden (DE-OS 37 19 421), bei dem dieses Problem der möglicherweise zu hohen Reibung innerhalb des Drahtzugs durch die Steigung des der Antrieb dienenden Gewindeganges verbesserbar ist, allerdings auf Kosten eines großen Drehwinkels. Eine geringe Steigung erfordert entsprechend einen großen Drehwinkel am Drehgriff zu Gunsten einer hohen Stellkraft. Die grundsätzlichen Nachteile des Drahtzugs sind damit also nicht lösbar. Während bei den eingangs genannten Kettenschaltungen die Rasteinrichtung meist im Bereich der Kettenschalteinrichtung angeordnet ist (DE-PS 31 32 103) ergibt der Drehgriff die Möglichkeit, die Rasteinrichtung in den Bereich der Bedienvorrichtung zu verlegen (DE-OS 37 19 421).

Bei einer bekannten gattungsgemäßen Gangschaltung für Fahrräder (DE-OS 42 41 521) wird der Geberzylinder unmittelbar durch einen Betätigungshebel betätigt, während der Nehmerzylinder über ein Zugseil mit der Kettenschalteinrichtung zur Verstellung des Kettenrades verbunden ist. Entsprechend wird der Kolben des Nehmerzylinders für die Betätigung nach innen geschoben, entgegen der Kraft einer am Zugseil angreifenden Feder. Die Rückstellung des Betätigungshebels erfolgt über eine im Geberzylinder angeordnete Rückstellfeder. Diese bekannte Gangschaltung vermeidet zwar die generellen Nachteile eines Bowdenzuges, behält aber die Nachteile des Drahtzugs im Bereich der Kettenschalteinrichtung. Zudem wird im Nehmerzylinder nur die Ringfläche des Kolbens beaufschlagt, so daß für die erforderliche Stellkraft ein verhältnismäßig großer Durchmesser des Kolbens erforderlich ist.

Eine hydraulische Leitung zur Kraftübertragung zu verwenden ist bereits sehr lange bekannt (FR-PS 10 44 279 aus 1951). So war es bereits bekannt, als Bedienvorrichtung einen Schwenkhebel zu verwenden, der über ein Zahnrad in eine als Zahnstange ausgebildete Kolbenstange des Geberzylinders greift, während die Kolbenstange des Nehmerzylinders entgegen einer Feder verschiebbar, direkt am Kettenrad angreift. Diese schon sehr lange bekannte hydraulikverwendende Gangschaltung ist im Bereich der Kettenschalteinrichtung außerordentlich ausladend, wodurch eine erhebliche Beschädigungsgefahr besteht, nämlich Beschädigungen die zu einem Auslaufen des Hydrauliköls führen können und dadurch nicht unmittelbar reparierbar sind.

Eine weitere bekannte hydraulische Kettenschaltung für Fahrräder (FR-PS 2.154.018) weist einen starr mit dem Fahrradrahmen verbundenen Nehmerzylinder auf. Nachteilig an dieser Konstruktion ist, daß sie außerordentlich ausladend ist, wodurch eine erhebliche Beschädigungsgefahr besteht, und, daß der Nehmerzylinder Führungskräfte übertragen muß, was zu Dichtigkeitsproblemen führt. Bei einer anderen Ausgestaltung dieser hydraulischen Kettenschaltung (Fig. 11) ist der Nehmerzylinder starr mit einem Teil der Schaltung verbunden und überträgt den Stellweg durch ein beidseitig drehbar gelagertes Zwischenstück auf den Teil der Schaltung, welcher die Kette führt. Auch hier ist der Nehmerzylinder nicht querkraftfrei und außerdem ist die erforderliche Stellkraft, aufgrund der ungünstigen Geometrie des Zwischenstücks, abhängig von der Schaltstellung. Möglicherweise sind die geschilderten Nachteile ursächlich dafür, daß bisher die Hydraulik bei Kettenschaltungen für Fahrrädern keinen oder nur in sehr eingeschränktem Umfang Eingang in die Praxis gefunden hat.

### Die Erfindung und ihre Vorteile

Demgegenüber hat die erfindungsgemäße Gangschaltung den Vorteil, daß auch der Nehmerzylinder durch den ihn umhüllenden Mantel vor Schmutz und Feuchtigkeit geschützt ist, so daß die Funktion der Gangschaltung nicht durch Verschmutzung beeinträchtigt wird. Außerdem können erfindungsgemäß auch zwei Hydraulikleitungen vorgesehen sein. In diesem Fall ist kein elastisches Element wie beispielsweise eine Feder notwendig, um die Rückstellung des Kettenrades in seine Ausgangsposition zu bewirken. Überdies tritt bei der Hydraulik nur eine geringe Reibung auf, so daß die erfindungsgemäße Gangschaltung leicht und mit wenig Kraft betätigt werden kann. Vorteilhafterweise zeichnet sich die erfindungsgemäße, mit Hydraulik arbeitende Gangschaltung gegenüber bekannten Gangschaltungen dadurch aus, daß sie wesentlich weniger störanfällig ist und deshalb weniger gewartet werden muß. Grundsätzlich lassen sich Hydraulikleitungen auch mit vielen Bogen von der Bedienvorrichtung zur Kettenschalteinrichtung führen, ohne daß dadurch eine höhere Kraft zur Betätigung notwendig wäre. Dies erleichtert die Führung der Hydraulikleitung von der Lenkstange her zur Kettenschalteinrichtung.

Dadurch, daß der Nehmerzylinder unmittelbar an der Verschiebeeinrichtung des Kettenrades angreift, sind keine zusätzlichen Teile erforderlich, über die die Stellkraftübertragung verfälscht werden könnte. Dadurch, daß der Arbeitsweg des Nehmerzylinders dem zur Verschiebung des Kettenrads erforderlichen Stellweg der Verschiebeinrichtung entspricht, ist eine optimale Übertragung der Stellkräfte von der Bedienvorrichtung auf die Kettenschalteinrichtung möglich. Durch das Verwenden von Schwenk- bzw. Drehlagern an den Aufhängepunkten des Nehmerzylinders wird der Nehmerzylinder erfindungsgemäß verdrehbar oder schwenkbar gelagert, so daß keine Querkräfte entstehen können die einerseits zu Undichtheiten des Arbeitszylinders führen könnten und andererseits zu Querkräften mit entsprechenden Reibungsverlusten. Aufgrund der erfindungsgemäßen Merkmale wird eine vollhydraulisch gesteuerte Gangschaltung erzielt, mit einem Minimum an Verstell- und Steuerverlusten, sowie an Bauraum und nicht zuletzt an erforderlicher Wartung.

Sowohl bei Geberzylinder als auch Nehmerzylinder kann durch Trennung von Kolben und Kolbenstange ein querkraftfreier Hub erzielt werden. Bei Schrägstellung des Kolbens könnte Luft in den Hydraulikkreis eindringen, was zu einem entsprechenden Fehler bei der Schaltung führen könnte.

Nach einer vorteilhaften Ausgestaltung der Erfindung dient zur Kettenradverschiebung eine vier Schwenklager aufweisende Parallelogrammschwinge, von der ein Basisteil mit dem Fahrradrahmen und das diesem abgewandte über zwei wenigstens annähernd parallele Schwingen verbundene Verstellteil mit dem Kettenrad verbunden ist, wobei der Nehmerzylinder an den paralleln Schwingen angreift. Hierbei muß der Raum innerhalb des Parallelogramms nur so groß sein, daß der Nehmerzylinder einbaubar ist. Basisteil und Verstellteil, sowie Schwingen werden dabei in ihren Abmessungen so gewählt, daß innerhalb des Verstellbereichs, also Arbeitshubbereichs des Nehmerzylinders keine zu spitzen Winkel zwischen jeweils Schwinge und Basisteil bzw. Verstellteil entsteht.

Nach einer weiteren vorteilhaften Ausgestaltung der Erfindung weist mindestens eine der Schwingen auf der der anderen Schwinge zugewandten Seite, für den Angriff des Nehmerzylinders einen Kragarm auf. Hierdurch ist eine Diagonalanordnung des Nehmerzylinders innerhalb der Parallelogrammschwinge vermeidbar, wodurch der Verstellbereich entsprechend vergrößerbar und die Gleichschaltung von Stellkraft und Verschieberichtung leichter erzielbar ist. Bevorzugt kann der Arbeitszylinder wenigstens annähernd parallel zu der Schwinge angeordnet sein.

Nach einer weiteren vorteilhaften Ausgestaltung der Erfindung ist an mindestens einer der Angriffsstellen (Aufhängepunkte) von Nehmerzylinder und Kettenschalteinrichtung eine die statische Länge des Arbeitszylinders änderbare Einrichtung vorhanden. Als eine solche Einrichtung kann ein Kopplungsteil dienen, das an der Kolbenstange des Arbeitszylinders längs verstellbar angeordnet ist und die Stellbewegung weiter überträgt, wobei die jeweilige Einstellage dieses Kopplungsteils zur Kolbenstange über Muttern erfolgt, die auf einem Gewinde der Kolbenstange laufen. Natürlich sind auch andere Möglichkeiten für die Feinverstellung denkbar.

Nach einer weiteren vorteilhaften Ausgestaltung der Erfindung beträgt der Abstand der Angriffsstellen des Nehmerzylinders in der Kettenschalteinrichtung weniger als 1000 mm. Ein solcher Abstand reicht für die erforderliche Verstellung aus und bewirkt ein Minimum an räumlicher Ausdehnung der Kettenschalteinrichtung.

Nach einer weiteren vorteilhaften Ausgestaltung der Erfindung weist die Führungslänge der Kolbenstange mehr als 0,1 mm auf, was sich ebenfalls vorteilhaft auf die Abmaße der Kettenschalteinrichtung, aber auch der Bedienvorrichtung auswirkt.

Eine weitere auch für sich geltend gemachte vorteilhafte Ausgestaltung der Erfindung besteht in den Merkmalen des Anspruchs 8. In Verbindung mit der Hydraulik ist die erfindungsgemäße Gangschaltung dadurch besonders einfach und leicht zu bedienen. Drehgriff und Hydraulik ermöglichen ein schnelles Wechseln der Gänge. Dies gilt insbesondere für das Schalten von einem niederen in einen hohen Gang und umgekehrt wobei mehrere Gänge übersprungen werden. Der Fahrradfahrer muß zum Schalten nicht eine Hand von der Lenkstange nehmen. Beide Hände bleiben an der Lenkstange und die Griffe können auch während des Schaltens mit beiden Händen festgehalten werden können. Dies erhöht die Fahrsicherheit eines mit einer erfindungsgemäßen Gangschaltung ausgestatteten Fahrrads gegenüber Fahrrädern mit bekannten Gangschaltungen. Durch die Verwendung eines Drehgriffes mit Rasteinrichtung kann auf eine zusätzliche wegbegrenzende Indexierung verzichtet werden, wie beispielsweise auf Anschlagschrauben oder dergleichen. Der Geberzylinder läßt sich problemlos radial am Lenker des Fahrrades anordnen, da dort ausreichend Platz zur Verfügung steht. Eine in radialer Richtung verlaufender Steuernocken hat den Vorteil, daß er bei einem Minimum an Aufwand individuell gestaltet werden kann. Durch lediglich Austauschen des Steuernockens, beispielsweise in Form eines Nockenrings kann bei gleichem Verdrehbereich je nach Ring ein unterschiedlicher Hubbereich des mit der Kolbenstange mit dem Steuernocken radial zusammenwirkenden Geberzylinder erzielt werden.

Nach einer weiteren vorteilhaften Ausgestaltung der Erfindung ist die Rasteinrichtung als in Art einer federnd nachgiebigen Klinke ausgebildet, welche in der Gangzahl entsprechende Ausnehmungen greift. Wobei nach weiterer vorteilhafter Ausgestaltung der Erfindung die Ausnehmungen in der radialen Mantelfläche des Drehgriffs angeordnet sind und wobei die Ausnehmungen in dem den Steuernocken tragenden auf vom Steuernocken nicht benutzten Restabschnitt desselben angeordnet sein können.

Nach einer weiteren vorteilhaften Ausgestaltung der Erfindung ist die Lage der Ausnehmungen in bezug auf die Klinke so gewählt, daß beim Umwerfen der Kette auf ein anderes Anbtriebszahnrad bzw. Antreibszahnrad eine gewisse Übersteuerung vorhanden, wobei die Rastpunkte der Rasteinrichtung für das Hochschalten diese Übersteuerung, bewirken, indem das Kettenrad durch die Kettenschalteinrichtung infolge dieser Übersteuerung etwas über die tatsächliche Arbeitsstellung geschoben wird, wodurch ein schnelles und einwandfreies Schalten bewirkt wird. Durch das Auswechseln des vorzugsweise als Ring ausgebildeten Steuernockens, an dem auch die Rastausnehmungen angeordnet sind, kann der gleiche Drehgriff sowohl für Sechs- oder Acht-, aber auch für Dreigangschaltungen verwendet werden, wobei auch die Abstände innerhalb der Kettenräder des Ganges unterschiedlich sein können. beispielsweise 4,8 mm oder 5 mm usw. Natürlich kann auch die ganze als Drehgriff ausgebildete Bedienvorrichtung leicht ausgetauscht werden, da die Befestigung am Lenker über eine Klemmvorrichtung völlig problemlos ist. Diese normalerweise die Antriebsräder betreffende Übersteuerung kann erfindungsgemäß auch eine Gangschaltung auf der Antriebszahnradseite betreffen.

Die Verwendung eines hydraulischen Systems bietet darüber hinaus verschiedene erfindungsgemäße Möglichkeiten des Ausbaus einer solchen Gangschaltung. So kann beispielsweise ein spezielles Hydrauliköl verwendet werden, welches in seiner Konsistenz weitgehend temperatur- und druckunabhängig ist.

Nach einer weiteren vorteilhaften Ausgestaltung der Erfindung weist die Hydraulikleitung einen Innendurchmesser von maximal drei Millimeter auf und besteht die Hydraulikleitung aus Metall, Kunststoff oder sonstigem harten Material besteht, wobei diese Materialien den bestimmten genannten Wünschen entgegenkommt. Bei dem geringen Durchmesser kann eine solche Hydraulikleitung leicht und auch oft ohne Schaden verbogen werden. Zudem ist das eingeschlossene Volumen vorteilhafterweise minimiert. Die Anschlüsse der Hydraulikleitungen können über Schneidringe mit Überwurfmuttern erfolgen und es können flexible Dichtelemente verwendet werden. So weist nach einer vorteilhaften Ausgestaltung der Erfindung das Hydrauliksystem mindestens eine Entlüftungseinrichtung auf, die bevorzugt am Anfang oder Ende der Hydraulikleitung beispielsweise an den Arbeitszylindern angeordnet ist.

Nach einer weiteren auch für sich geltend gemachten Ausgestaltung der Erfindung ist der Druck und/oder das Flüssigkeitsvolumen der Hydraulikeinrichtung steuerbar. Erfindungsgemäß kann eine solche Drucksteuerung auch zur Gangschaltung verwendet werden. Je nach Änderung des Drucks wird der Nehmerzylinder und damit ein Kettenrad verstellt.

Nach einer weiteren diesbezüglichen Ausgestaltung der Erfindung wirkt die Drucksteuerung bei Druckänderungen durch Leck, Temperaturänderungen der Hydraulik oder Außendruckänderungen korriegierend, d.h. regulierend oder aber auch verändernd, je nachdem was vorgesehen ist.

Nach einer weiteren vorteilhaften Ausgestaltung der Erfindung arbeitet die Steuerung automatisch oder aber willkürlich. Diese letztgenannten Möglichkeiten können wichtige Anforderungen an den Komfort von Gangschaltungen erfüllen und sind nur bei optimierten hydraulischen Gangschaltungen möglich.

Nach einer weiteren vorteilhaften Ausgestaltung der Erfindung wirkt die Hydraulikeinrichtung mit einer Volumensteuerung zusammen, welche einen Weggeber aufweist, der mit dem Weggeber einer Volumenvergleichseinrichtung synchronisiert ist, welche bei einer kenngrößenabhängigen Änderung ihres Volumens eine einen Mindestdruck erhaltende analoge Änderung des Volumens der Hydraulikeinrichtung bewirkt. Hierdurch wird erreicht, daß beispielsweise bei einer wesentlichen Erhöhung der Umgebungstemperatur und der damit gegebenen Ausdehnung des Hydrauliköls mit der Volumenvergleichseinrichtung erreicht wird, daß das Volumen der Hydraulikeinrichtung entsprechend vergrößert wird, um den tatsächlichen Hydraulikdruck konstant zu halten.

Nach einer diesbezüglichen vorteilhaften Ausgestaltung der Erfindung sind die Weggeber jeweils Kolben bzw. Kolbenstangen von Arbeitszylindern der Volumensteuereinrichtung bzw. der Volumenvergleichseinrichtung, wobei beide Weggeber für ihren Längshub miteinander gekoppelt sind und daß sie gegen die gleiche Rückstellkraft (Anschlag, Feder) wirken, so daß ein Verschieben des Weggebers der Volumenvergleichseinrichtung ein entsprechendes Verschieben jenes Weggebers der Volumensteuereinrichtung zur Folge hat. Natürlich ist hierbei die Rückstellkraft, die lediglich durch die Volumenänderung der Volumenvergleichseinrichtung überwunden werden muß, so groß gewählt, daß sie nicht beim Arbeiten mit der Hydraulikeinrichtung, d.h. Verschieben der Hydraulikflüssigkeit innerhalb der Hydraulikeinrichtung zum Durchführen der Schaltung überwunden werden kann. Der Arbeitsdruck innerhalb der Hydraulikeinrichtung reicht also nicht aus, um die Rückstellkraft zu überwinden. Als Rückstellkraft kann eine vorzugsweise in der Vorspannung änderbare Schraubenfeder dienen.

Nach einer weiteren vorteilhaften Ausgestaltung der Erfindung sind der Geberzylinder und der Nehmerzylinder als doppelt wirkend Arbeitszylinder ausgebildet, wobei die beiden Arbeitsräume dieser Arbeitszylinder über hydraulisch parallel geschaltete Hydraulikleitungen mit den entsprechenden Arbeitsräumen verbunden sind, wobei die eine Hydraulikleitung mit der Volumensteuerung und die andere Hydraulikleitung mit der Volumenvergleichssteuerung verbunden ist. Hierdurch ist eine Synchronisation von Volumensteuereinrichtung und Volumenvergleichseinrichtung gegeben, da die beiden vorhandenen Hydraulikräume in etwa das gleiche Volumen aufweisen, so daß eine partielle Erwärmung des einen Kreises eine entsprechende Korrektur über den anderen Kreis bewirkt.

Nach einer diesbezüglichen weiteren Ausgestaltung der Erfindung sind die beiden Hydraulikleitungen über eine Kurzschlußleitung miteinander verbunden, wobei diese Kurzschlußleitung über ein dem Volumenabgleich dienendes Ventil steuerbar. Über diese Kurzschlußleitung und das Volumenabgleichventil kann vor Inbetriebnahme in einfacher Weise ein Volumenausgleich zwischen beiden Kreisen erzielt werden.

Bei den Lösungen mit Vergleichswerten wird bevorzugt mit Ölen gleicher Konsistenz gearbeitet. Bei voneinander abweichenden Werten muß dieses allerdings berücksichtigt werden, entweder in Form unterschiedlicher Kolbenquerschnitte, aber auch in Form von Federkräften oder unterschiedlichen Volumina.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel des Gegenstandes der Erfindung ist in mehreren Varianten und stark vereinfacht in der Zeichnung dargestellt und im folgenden näher beschrieben.

Es zeigen:
- Fig. 1: die Gangschaltung in perspektivischer Ansicht,
- Fig. 2: eine schematische Darstellung der Gangschaltung,
- Fig. 3: eine erste Variante der Hydraulikeinrichtung der Gangsschaltung und
- Fig. 4: eine zweite Variante derselben.

### Beschreibung des Ausführungsbeispiels

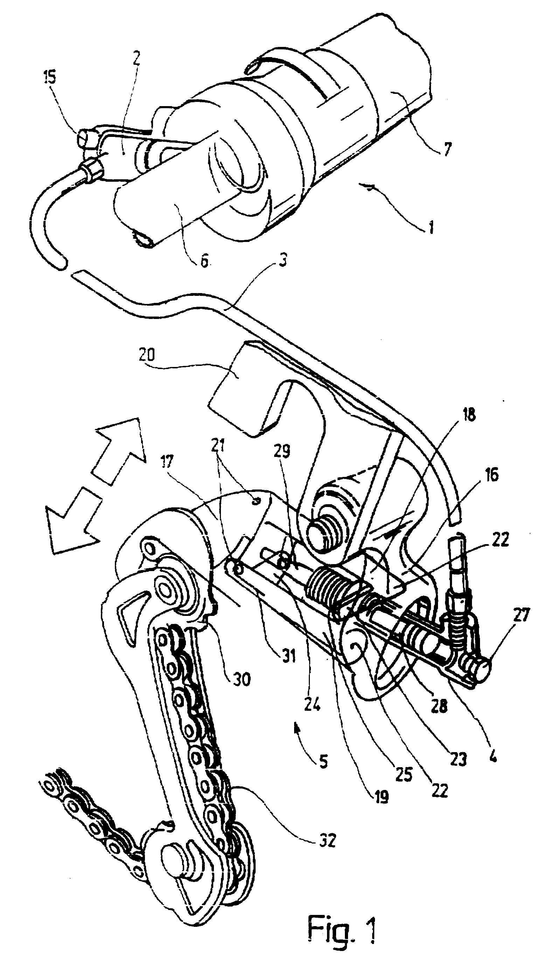

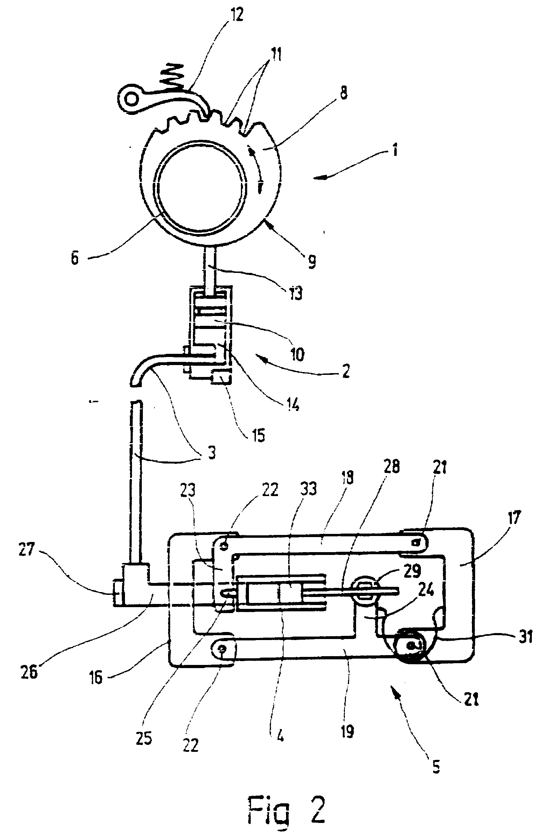

In Fig. 1 und 2 ist lediglich die erfindungsgemäße Gangschaltung mit ihren wichtigsten Teilen dargestellt, ohne das Fahrrad im übrigen zu zeigen. Eine Bedienvorrichtung 1 betätigt einen Geberzylinder 2, der über eine Hydraulikleitung 3 mit einem Nehmerzylinder 4 zusammenwirkt, welcher in einer Kettenschalteinrichtung 5 angeordnet ist.

Die Bedienvorrichtung 1 ist auf einer Lenkstange 6 angeordnet und weist einen auf dieser Lenkstange 6 verdrehbaren Drehgriff 7 auf, welcher eine mit dem Drehgriff drehschlüssig verbundenen Nockenring 8 aufweist, auf dessen radiale Mantelfläche teilweise eine Steuerkurve 9 angeordnet ist, und teilweise Ausnehmungen 11, die mit einer Klinke 12 zusammenwirken, welche federnd in die Ausnehmungen 11 greift. Die Zahl der Ausnehmungen 11 entspricht der Zahl der von der Gangschaltung zu versorgenden Gänge. Je nach Drehlage des Nockenrings 8, also entsprechend je einem Abschnitt der Steuerkurve 9, greift die Klinke 12 in eine andere der Ausnehmungen 11.

Die Steuerkurve 9 wird durch die freie Stirnseite der Kolbenstange 13 eines Geberkolbens (10) des Geberzylinders 2 abgetastet, so daß je nach Abschnitt der Steuerkurve 9 bzw. über die Rasteinrichtung 11, 12 eingestellte Gang ein unterschiedliches Volumen im Arbeitsraum 14 des Geberzylinders 2 vorhanden ist. Am Geberzylinder 2 ist zudem im Übergangsbereich zwischen Arbeitsraum 14 und Hydraulikleitung 3 eine Entlüftungsschraube 15 angeordnet.

Die Kettenschalteinrichtung 5 weist eine Parallelogrammschwinge auf mit einem mit dem Fahrradrahmen (20) verbundenen Basisteil 16, einem diesem gegenüberliegenden Verstellteil 17 und zweien die beiden Teile 16, 17 zu einem Parallelogramm miteinander verbindenden und parallel zueinander angeordneten Schwingen 18, 19, wobei zur Verbindung der einzelnen Teile der Parallelogrammschwinge Lager 21, 22 dienen, die ein Verstellen bzw. Verschieben der Parallelogrammschwinge in einer Ebene ermöglichen. Am Verstellteil 17 ist - nicht näher dargestellt - ein Kettenrad 30 angeordnet, über welches die Kette 32 auf die einzelnen nicht dargestellten Abtriebszahnräder umgeworfen werden kann. An den beiden Schwingen 18, 19 ist jeweils ein Kragarm 23, 24 auf den einander zugewandten Seiten der Schwingen 18, 19 angeordnet, wobei zwischen den Kragarmen 23, 24 der Nehmerzylinder 4 angeordnet ist. Für den Angriff zwischen dem Kragarm 23 und dem Nehmerzylinder 4 dient ein Lager 25, das sowohl eine Dreh- als auch eine Kippbewegung zuläßt. Ein Anschlußteil 26 des Nehmerzylinders 4 für die Hydraulikleitung 3 folgt somit jeweils den Schwenkbewegungen des Zylinders 4. An diesem Anschlußteil 26 ist nahe der Anschlußstelle der Hydraulikleitung 3 eine Entlüftungsschraube 27 vorgesehen. Die am Kragarm 24 angreifende Kolbenstange 28 des Nehmerzylinders 4 weist ein Gewinde auf, über das ein Kupplungsstück 29 axial auf der Kolbenstange 28 zur Feinjustierung verstellbar ist. Als Rückstellkraft greift zwischen Kragarm 24 und Verstellstück 17 eine Feder 31 an. Zwischen dem Nehmerkolben 33 und seiner Kolbenstange 28 besteht keine feste Verbindung, wie auch zwischen Geberkolben 10 und dessen Kolbenstange 13 Durch Verdrehen des Nockenrings 8 und entsprechendem Gleiten der Klinke 12 von einer der Ausnehmungen 11 in eine andere wird die Kolbenstange 13 über die Steuerkurve 9 verschoben, so daß aus dem Arbeitsraum 14 des Geberzylinders 2 Hydrauliköl in der Hydraulikleitung 3 verschoben wird und damit eine entsprechende Lageänderung der Kolbenstange 28 im Nehmerzylinder 4 bewirkt. Durch diese Lageänderung wird über die Kragarme 23, 24 und die Kraft der Feder 31 die Parallelogrammschwinge um die Lager 21, 22 verschoben, wodurch auch das Kettenrad 30 verschoben und die Kette 32 bei der Gangschaltung umgeworfen wird.

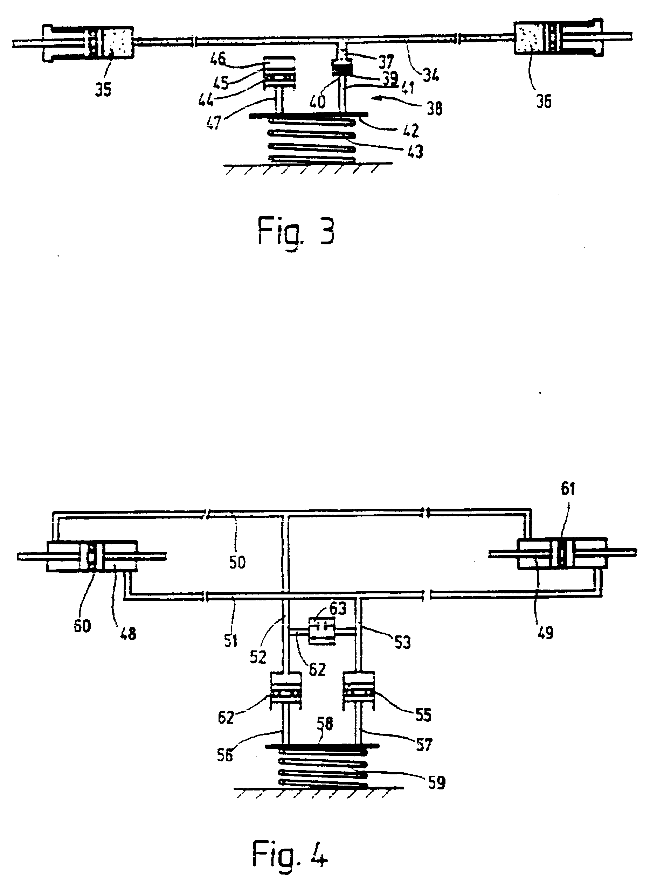

In Fig. 3 und 4 sind zwei Varianten der Hydraulikeinrichtung dargestellt, die auch bei anderen mit Hydraulik zusammenwirkenden Vorrichtungen eingesetzt werden können. Von der Hydraulikleitung 34, an deren Enden einerseits der Geberzylinder 35 und andererseits der Nehmerzylinder 36 angeordnet sind, zweigt eine Steuerleitung 37 ab, die zu einer Volumensteuereinrichtung 38 führt. Diese Volumensteuereinrichtung weist einen Steuerarbeitszylinder 39 auf, dessen Arbeitskolben 40 von der Flüssigkeit der Steuerleitung 37 beaufschlagt ist und dessen Kolbenstange 41 (Weggeber) mit einer Anschlagplatte 42 zusammenwirkt, die durch eine Schraubenfeder 43 belastet ist. Die jeweilige Lage der Anschlagplatte 42 wird durch eine Volumenvergleichseinrichtung 44 bestimmt, die einen Arbeitszylinder 45 aufweist, dessen Kolben 46 mit einer dem Hydrauliköl zu vergleichenden Flüssigkeit beaufschlagt ist und dessen Kolbenstange 47 (Weggeber) mit der Anschlagplatte 42 zusammenwirkt. Das den Kolben 46 beaufschlagende Volumen im Arbeitszylinder 45 entspricht bei gleicher Hydraulikflüssigkeit jenem in der Hydraulikleitung 34 einschließlich der Steuerleitung 37. Sobald beispielsweise aufgrund der Umgebungstemperatur und der entsprechenden Ausdehnung der Hydraulikflüssigkeit in der Volumenvergleichseinrichtung 44 der Kolben 46 über seine Kolbenstange 47 die Anschlagplatte 42 entgegen der Kraft der Schraubenfeder 43 verschiebt; folgt dieser Verschiebung die Kolbenstange 41 mit Arbeitskolben 40 wodurch entsprechend das Volumen in der Hydraulikleitung 44 vergrößert wird. Hierdurch wird die Temperatureinwirkung in bezug auf die Hydraulikschaltung kompensiert.

Bei der in Fig. 4 dargestellten Variante der Hydrauliksteuereinrichtung sind Geberzylinder 48 und Nehmerzylinder 49 als doppelt wirkende Arbeitszylinder ausgebildet, deren Arbeitsräume nunmehr durch zwei Hydraulikleitungen 50 und 51 miteinander verbunden sind. Von diesen Hydraulikleitungen 50 und 51 zweigt jeweils eine Steuerleitung 52 und 53 ab, die jeweils in einen Steuerarbeitszylinder 54 und 55 münden. Die Kolbenstangen 56 und 57 dieser Steuerarbeitszylinder wirken parallel auf eine Anschlagsplatte 58, die durch eine Feder 59 belastet ist. Sowohl die Hydraulikleitungen 50, 51 als auch die Steuerleitungen 52 und 53, sowie die Steuerarbeitszylinder 54 und 55 sind hydraulisch parallel geschaltet. Dies bewirkt, daß der Druck in diesen parallel geschaltet Kreisen gleich sind, so daß sich im Geberzylinder 48 und Nehmerzylinder 49 die Kolben 60 und 61 eine Stellung einnehmen, für die auf beiden Seiten des Kolbens der gleiche Druck herrscht. Zwischen den Steuerleitungen 52 und 53 ist eine Kurzschlußleitung 62 angeordnet mit einem Ventil 63 über das beim Einstellen der Gangschaltung die in den beiden Hydraulikkreisen vorhandenen Volumina gegeneinander ausgeglichen werden können, d.h. daß nach Einstellen von Bedienvorrichtung 1 und Kettenschalteinrichtung 5 dieses Ventil geschlossen wird.

Alle der Beschreibung, den Ansprüchen und der Zeichnung entnehmbaren Merkmale können sowohl einzeln als auch in beliebiger Kombination miteinander erfindungswesentlich sein.

### Bezugszahlenliste

- 1: Bedienvorrichtung
- 2: Geberzylinder
- 3: Hydraulikleitung
- 4: Nehmerzylinder
- 5: Kettenschalteinrichtung
- 6: Lenkerstange
- 7: Drehgriff
- 8: Nockenring
- 9: Steuerkurve
- 10: Geberkolben
- 11: Ausnehmungen
- 12: Klinke
- 13: Kolbenstange
- 14: Arbeitsraum
- 15: Entlüftungsschraube
- 16: Basisteil
- 17: Verstellteile
- 18: Schwinge
- 19: Schwinge
- 20: Fahrradrahmen
- 21: Lager
- 22: Lager
- 23: Kragarm
- 24: Kragarm
- 25: Lager
- 26: Anschlußteil
- 27: Entlüftungsschrauben
- 28: Kolbenstange
- 29: Kopplungsstück
- 30: Kettenrad
- 31: Feder
- 32: Kette
- 33: Nehmerkolben
- 34: Hydraulikleitung
- 35: Geberzylinder
- 36: Nehmerzylinder
- 37: Steuerleitung
- 38: Volumensteuereinrichtung
- 39: Steuerarbeitszylinder
- 40: Arbeitskolben
- 41: Kolbenstange
- 42: Anschlagplatte
- 43: Schraubenfeder
- 44: Volumenvergleichseinricht.
- 45: Arbeitszylinder
- 46: Kolben
- 47: Kolbenstange
- 48: Geberzylinder
- 49: Nehmerzylinder
- 50: Hydraulikleitung
- 51: Hydraulikleitung
- 52: Steuerleitung
- 53: Steuerleitung
- 54: Steuerarbeitszylinder
- 55: Steuerarbeitszylinder
- 56: Kolbenstange
- 57: Kolbenstange
- 58: Anschlagplatte
- 59: Feder
- 60: Kolben
- 61: Kolben
- 62: Kurzschlußleitung
- 63: Ventil

## Patentansprüche

1. Gangschaltung für Fahrräder
- mit einer, eine Verschiebeeinrichtung (16, 17, 18, 19) aufweisenden, mechanischen Kettenschalteinrichtung (5), welche ein die Kette führendes, quer zur Laufrichtung der Kette verschiebbares Kettenrad betätigt,
- mit einer Bedienvorrichtung (1), über die der Fahrradfahrer die Kettenschalteinrichtung (5) betätigen und die Kette umwerfen kann.
- mit einer Hydraulikeinrichtung mit Hydraulikleitung (3) zur Stellwegübertragung zwischen Bedienvorrichtung (1) und Kettenschalteinrichtung (5),
- mit einem mit der Bedienvorrichtung (1) zusammenwirkenden Geberzylinder (2) einenends und einem mit der Kettenschalteinrichtung (5) zusammenwirkenden Nehmerzylinder (4) andererseits der Hydraulikleitung (3) und
- mit einer Rasteinrichtung (11, 12) zum Festhalten des eingestellten Gangs,
dadurch gekennzeichnet,
- daß die Kolbenstange (28) des Nehmerzylinders (4) unmittelbar an der Verschiebeeinrichtung (16, 17, 18, 19) des Kettenrades angreift.
- daß der Arbeitsweg des Nehmerzylinders (4) bzw. dessen Kolbenstange (28) dem zur Verschiebung des Kettenrads erforderlichen Stellweg der Verschiebeeinrichtung (16, 17, 18, 19) entspricht,
- daß die Angriffslager (25) des Nehmerzylinders (4) als Schwenk- oder Drehlager ausgebildet sind, so
- daß der Nehmerzylinder (4) bei seiner Verschiebearbeit nahezu querkraftfrei ist.

2. Gangschaltung nach Anspruch 1, dadurch gekennzeichnet, daß zur Kettenradverschiebung eine vier Schwenklager (21, 22) aufweisende Parallelogrammschwinge dient, von der ein Basisteil (16) mit dem Fahrradrahmen und das diesem abgewandte über zwei wenigstens annähernd parallele Schwingen (18, 19) verbundene Verstellteil (17) mit dem Kettenrad verbunden ist und daß der Nehmerzylinder (4) an den Schwingen (18, 19) angreift.

3. Gangschaltung nach Anspruch 2, dadurch gekennzeichnet, daß mindestens eine der Schwingen (18, 19) auf der der anderen Schwinge zugewandten Seite für den Angriff des Nehmerzylinders (4) einen Kragarm (23, 24) aufweist.

4. Gangschaltung nach Anspruch 2 oder 3, dadurch gekennzeichnet, daß der Nehmerzylinder (4) wenigsten annähernd parallel zu den Schwingen (18, 19) angeordnet ist.

5. Gangschaltung nach einem der Ansprüche 1 bis 4, dadurch gekennzeichnet, daß an mindestens einer der Angriffsstellen (25, 24) von Nehmerzylinder (4) und Kettenschalteinrichtung eine die statische Länge des Arbeitszylinders änderbare Einrichtung vorhanden ist.

6. Gangschaltung nach einem der vorhergehenden Ansprüche, dadurch gekennzeichnet, daß der Abstand der Angriffsstellen des Nehmerzylinders (4) in der Kettenschalteinrichtung weniger als 1000 mm beträgt.

7. Gangschaltung nach einem der vorhergehenden Ansprüche, dadurch gekennzeichnet, daß die Führungslänge der Kolbenstange (28) mehr als 0,1 mm aufweist.

8. Gangschaltung insbesondere nach einem der vorhergehenden Ansprüche, dadurch gekennzeichnet,
- daß als Bedienvorrichtung ein Drehgriff dient,
- daß am Drehgriff ein in radialer Richtung verlaufender Steuernocken (8, 9) angeordnet ist,
- daß der Steuernocken (8, 9) radial auf die Kolbenstange (13) bzw. die Rückseite des Kolbens des Geberzylinders (2) wirkt und
- daß die Rasteinrichtung am Drehgriff angeordnet ist.

9. Gangschaltung nach Anspruch 8, dadurch gekennzeichnet, daß die Rasteinrichtung als in Art einer federnd nachgiebigen Klinke (12) ausgebildet ist, welche in der Gangzahl entsprechende Ausnehmungen (11) greift.

10. Gangschaltung nach Anspruch 9, dadurch gekennzeichnet, daß die Ausnehmungen (11) in der radialen Mantelfläche des Drehgriffs angeordnet sind.

11. Gangschaltung nach einem der Ansprüche 8 bis 10, dadurch gekennzeichnet, daß ein Nockenring (8) mit dem Drehgriff verdrehbar ist, auf dessen radialer Mantelfläche einerseits die Steuerkurve (9) vorhanden ist und auf dem nicht benutzten Restabschnitt derselben die Ausnehmungen (11) für die Rasteinrichtung.

12. Gangschaltung nach einem der Ansprüche 8 bis 11, dadurch gekennzeichnet, daß die Lage der Ausnehmungen (11) in bezug auf die Klinke (12) so gewählt ist, daß beim Umwerfen der Kette auf ein anderes Abtriebszahnrad bzw. Antriebszahnrad eine gewisse Übersteuerung vorhanden ist.

13. Gangschaltung nach einem der vorhergehenden Ansprüche, dadurch gekennzeichnet, daß die Hydraulikleitung einen Innendurchmesser von maximal drei Millimeter aufweist und aus Metall, Kunststoff oder sonstigem harten Material besteht.

14. Gangschaltung insbesondere nach einem der vorhergehenden Ansprüche, dadurch gekennzeichnet, daß der Druck und oder das Flüssigkeitsvolumen der Hydraulikeinrichtung steuerbar ist.

15. Gangschaltung nach Anspruch 14, dadurch gekennzeichnet, daß die Drucksteuerung zur Verstellung des Nehmerzylinders dient.

16. Gangschaltung nach Anspruch 14 oder 15, dadurch gekennzeichnet, daß die Drucksteuerung bei Druckänderungen durch Leck, Temperaturänderung der Hydraulik oder Außendruckänderungen korrigierend wirkt.

17. Gangschaltung nach einem der Ansprüche 14 bis 16, dadurch gekennzeichnet, daß die Drucksteuerung automatisch oder willkürlich arbeitet.

18. Gangschaltung nach einem der Ansprüche 14 bis 17, dadurch gekennzeichnet, daß die Hydraulikeinrichtung mit einer Volumensteuereinrichtung (38) zusammenwirkt, welche einen Weggeber (41) aufweist, der mit dem Weggeber (47) einer Volumenvergleichseinrichtung (44) synchronisiert ist, welche bei einer kenngrößenabhängigen Änderung ihres Volumens eine einen Mindestdruck erhaltende analoge Änderung des Volumens der Hydraulikeinrichtung bewirkt.

19. Gangschaltung nach Anspruch 18, dadurch gekennzeichnet, daß die Weggeber jeweils Kolben (40, 46) bzw. Kolbenstangen (41, 47) von Arbeitszylindern (39, 45) der Volumensteuereinrichtung (38) bzw. der Volumenvergleichseinrichtung (44) sind, daß beide Weggeber für ihren Längshub miteinander gekoppelt sind und daß sie gegen die gleiche Rückstellkraft (Anschlag 42, Feder 43) wirken, so daß ein Verschieben des Weggebers der Volumenvergleichseinrichtung (44) ein entsprechendes Verschieben jenes Weggebers der Volumensteuereinrichtung (38) zur Folge hat.

20. Gangschaltung nach Anspruch 18 oder 19, dadurch gekennzeichnet, - daß der Geberzylinder (48) und der Nehmerzylinder (49) als doppelt wirkende Arbeitszylinder ausgebildet sind,
- daß die beiden Arbeitsräume dieser Arbeitszylinder (48, 49) über hydraulisch parallel geschaltete Hydraulikleitungen (50, 51) mit den entsprechenden Arbeitsräumen verbunden sind und
- daß die eine Hydralikleitung (50) mit der Volumensteuereinrichtung (54, 56) und die andere Hydraulikleitung (50) mit der Volumenvergleichseinrichtung (55, 57) verbunden ist.

21. Gangschaltung nach Anspruch 20, dadurch gekennzeichnet, daß die beiden Hydraulikleitungen (50, 51) über eine Kurzschlußleitung (62) miteinander verbunden sind und diese Kurzschlußleitung über ein dem Volumenabgleich dienendes Ventil (63) steuerbar ist.

## Claims

1. Gear shifter for bicycles
- with a mechanical chain shifting device (5) having a displacement device (16, 17, 18, 19) and which operates a chain wheel guiding the chain and displaceable transverse to the direction of travel of the chain,
- with an operating device (1) by means of which the bicycle rider can operate the chain shifting device (5) to shift the chain,
- with a hydraulic device having a hydraulic conduit (3) for transfer of a displacement path between the operating device (1) and the chain shifting device (5),
- with a feed cylinder (2) cooperating with the operation device (1) at one end and with a slave cylinder (4) cooperating with the chain shifting device (5) on the other end of the hydraulic conduit (3), and
- with a latching device (11, 12) for holding the selected gear,
characterized in that
- the piston rod (28) of the slave cylinder (4) directly engages the displacement device (16, 17, 18, 19) of the chain wheel,
- and the working path of the slave cylinder (4) or of its piston rod (28) corresponds to the required displacement path of the displacement device (16, 17, 18, 19) necessary for displacing the chain wheel,
- and the engagement bearing (25) of the slave cylinder (4) is configured as a pivoting or rotating bearing such that
- the slave cylinder (4) is virtually free of transverse forces when carrying out its displacement function.

2. Gear shifter according to claim 1, characterized in that a parallelogram link having four pivot bearings (21, 22) serves for chain wheel displacement of which a base component (16) is connected to the frame of the bicycle with the adjustment portion (17), separated therefrom and connected thereto by means of at least two approximately parallel links (18, 19), being connected to the chain wheel with the slave cylinder (4) engaging the links (18, 19).

3. Gear shifter according to claim 2, characterized in that at least one of the links (18, 19) comprises a cantilever (23, 24) on its side facing the other link for engagement with the slave cylinder (4).

4. Gear shifter according to claim 2 or 3, characterized in that the slave cylinder (4) is disposed at least approximately parallel to the links (18, 19).

5. Gear shifter according to any one of the claims 1 through 4, characterized in that a device which can change the static length of the working cylinder is disposed on at least one of the engagement locations (25, 24) of the slave cylinder (4) and the gear shifting device.

6. Gear shifter according to any one of the preceding claims, characterized in that the separation of the engagement locations of the slave cylinder (4) of the chain shifting device is less than 1000 mm.

7. Gear shifter according to any one of the preceding claims, characterized in that the guide length of the piston rod (28) is more than 0.1 mm.

8. Gear shifter, in particular according to any one of the preceding claims, characterized in that
- a rotating grip serves as the operating device
- and a control cam (8, 9) is disposed on the rotating grip to extend in a radial direction,
- and the control cam (8, 9) acts radially on the piston rod (13) or on the backside of the piston of the feed cylinder (2) and
- the latching device is disposed on the rotating grip.

9. Gear shifter according to claim 8, characterized in that the latching device is a resilient flexible catch (12) which engages into the opening (11) corresponding to the gear number.

10. Gear shifter according to claim 9, characterized in that the openings (11) are disposed in the radial outer surface of the rotating grip.

11. Gear shifter according to any one of the claims 8 through 10, characterized in that a cam ring (8) can be rotated with the rotating grip having a cam shape (9) on its radial outer surface and having the openings (11) for the latching device on remaining free surfaces thereof.

12. Gear shifter according to any one of the claims 8 through 11, characterized in that the positions of the openings (11) relative to the catch (12) are chosen in such a fashion that, when displacing the chain onto a different drive gear a certain additional amount of displacement control is present.

13. Gear shifter according to any one of the preceding claims, characterized in that the hydraulic conduit has an inside diameter of at most 3 mm and is made from metal, plastic or another hard material.

14. Gear shifter in particular according to any one of the preceding claims, characterized in that the pressure and/or the fluid volume of the hydraulic device can be controlled.

15. Gear shifter according to claim 14, characterized in that the pressure control adjusts the slave cylinder.

16. Gear shifter according to claim 14 or 15, characterized in that the pressure control corrects pressure changes caused by leaks, temperature changes in the hydraulic or external pressure changes.

17. Gear shifter according to any one of the claims 14 though 16, characterized in that the pressure control works automatically or without activation.

18. Gear shifter according to any one of the claims 14 through 17, characterized in that the hydraulic device cooperates with a volume control device (38) having a path control (41) which is synchronized with the path control (47) of a volume comparison device (44) which, in the event of a calibration dependent change in its volume, effects an analogous change in the volume of the hydraulic device to maintain a minimum pressure.

19. Gear shifter according to claim 18, characterized in that the path control is always effected by pistons (40, 46) or piston rods (41, 47) of working cylinders (39, 45) of the volume control device (44) or of the volume comparison device (44), and both path controls are coupled together for their longitudinal stroke and act in opposition to the same restoring force (abutment 42, spring 43) so that a displacement of the path control of the volume comparison device (44) results in a corresponding displacement of the path control of the volume control device (38).

20. Gear shifter according to claim 18 or 19, characterized in that the feed cylinder (48) and the slave cylinder (49) are configured as doubly acting working cylinders
- and the two working volumes of these working cylinders (48, 49) are connected to the corresponding working volumes via hydraulic conduits (50, 51) which are hydraulically circuited in parallel and
- one hydraulic conduit (50) is connected to the volume control device (54, 56) and the other hydraulic conduit (50) is connected to the volume comparison device (55, 57).

21. Gear shifter according to claim 20, characterized in that both hydraulic conduits (50, 51) are connected to each other by means of a short circuit conduit (62) which can be controlled by a valve (63) for volume adjustment.

## Revendications

1. Mécanisme de changement de vitesse pour bicyclette
- avec un dispositif dérailleur mécanique (5) ayant un dispositif de décalage (16, 17, 18, 19) et actionnannt une roue dentée qui guide la chaîne et qui peut être déplacée transversalement par rapport au sens de rotation de la chaîne,
- avec un dispositif de commande (1), au moyen duquel le cycliste peut actionner le dispositif dérailleur (5) et faire dérailler la chaîne,
- avec un dispositif hydraulique avec conduite hydraulique (3) pour la transmission du parcours de réglage entre le dispositif de commande (1) et le dispositif dérailleur (5),
- avec un cylindre capteur (2) agissant ensemble avec le dispositif de commande (1) d'un côté, et avec un cylindre récepteur (4) agissant ensemble avec le dispositif dérailleur (5) de l'autre côté de la conduite hydraulique (3) et
- avec un dispositif d'enclenchement (11, 12) pour fixer la vitesse sélectionnée,
caractérisé par le fait
- que la tige de piston (28) du cylindre récepteur (4) attaque directement sur le dispositif de décalage (16, 17, 18, 19) de la roue dentée,
- que le parcours de réglage du cylindre récepteur (4) ou de sa tige de piston (28) correspond au parcours de réglage du dispositif de décalage (16, 17, 18, 19) nécessaire au déplacement de la roue dentée,
- que les paliers d'attaque (25) du cylindre récepteur (4) sont conçus en tant que paliers pivotants ou rotatifs, si bien
- que pendant son travail de décalage, le cylindre récepteur (4) est pratiquement libre de forces transversales.

2. Mécanisme de changement de vitesse selon la revendication 1, caractérisé par le fait qu'une bielle en parallélogramme disposant de quatre paliers pivotants (21, 22) sert à décaler la roue dentée, un élément de base (16) étant relié au cadre du vélo et l'élément réglable (17) relié à l'élément de base par deux bielles (18, 19) au moins grossièrement parallèles et opposé à celui-ci étant relié à la roue dentée, et que le cylindre récepteur (4) attaque sur les bielles (18, 19).

3. Mécanisme de changement de vitesse selon la revendication 2, caractérisé par le fait qu'au moins une des bielles (18, 19) présente un bras en porte-à-faux (23, 24), sur le côté tourné vers l'autre bielle, pour l'attaque du cylindre récepteur (4).

4. Mécanisme de changement de vitesse selon la revendication 2 ou 3, caractérisé par le fait que par rapport aux bielles (18, 19), le cylindre récepteur (4) est disposé de façon au moins grossièrement parallèle.

5. Mécanisme de changement de vitesse selon l'une des revendications 1 à 4, caractérisé par le fait que sur au moins un des points d'attaque (25, 24) du cylindre récepteur (4) et du dispositif dérailleur, il y a un dispositif changeant la longueur statique du cylindre de travail.

6. Mécanisme de changement de vitesse selon l'une des revendications précédentes, caractérisé par le fait que l'écart des points d'attaque du cylindre récepteur (4) dans le dispositif dérailleur comporte moins de 1000 mm.

7. Mécanisme de changement de vitesse selon l'une des revendications précédentes, caractérisé par le fait que la longueur de guidage de la tige de piston (28) est de plus de 0,1 mm.

8. Mécanisme de changement de vitesse notamment selon l'une des revendications précédentes, caractérisé par le fait
- qu'une poignée rotative sert de dispositif de commande,
- qu'une came de commande (8, 9) de direction radiale est disposée sur la poignée rotative,
- que la came de commande (8, 9) agit radialement sur la tige de piston (13) ou sur le côté arrière du piston du cylindre capteur (2) et
- que le dispositif d'enclenchement est disposé sur la poignée rotative.

9. Mécanisme de changement de vitesse selon la revendication 8, caractérisé par le fait que le dispositif d'enclenchement est conçu à la manière d'un cliquet agissant contre la force d'un ressort (12) et rentrant dans l'évidement (11) correspondant à la vitesse choisie.

10. Mécanisme de changement de vitesse selon la revendication 9, caractérisé par le fait que les évidements (11) sont disposés sur la surface périphérique radiale de la poignée rotative.

11. Mécanisme de changement de vitesse selon l'une des revendications 8 à 10, caractérisé par le fait qu'un anneau à came (8) peut tourner avec la poignée rotative et que sur la surface périphérique radiale de l'anneau à came, il y a d'un côté la courbe de commande (9), et sur la section non utilisée de celle-ci, les évidements (11) pour le dispositif d'enclenchement.

12. Mécanisme de changement de vitesse selon l'une des revendications 8 à 11, caractérisé par le fait que la position des évidements (11) par rapport au cliquet (12) a été choisie de telle façon qu'au moment du déraillement de la chaîne sur un autre pignon ou plateau, il y a un certain surdécalage.

13. Mécanisme de changement de vitesse selon l'une des revendications précédentes, caractérisé par le fait que la conduite hydraulique a un diamètre intérieur de trois millimètres au maximum et qu'elle est en métal, matière plastique ou tout autre matériau dur.

14. Mécanisme de changement de vitesse notamment selon l'une des revendications précédentes, caractérisé par le fait que la pression ou le volume du liquide du dispositif hydraulique sont réglables.

15. Mécanisme de changement de vitesse selon la revendication 14, caractérisé par le fait que le réglage de la pression sert à mouvoir le cylindre récepteur.

16. Mécanisme de changement de vitesse selon la revendication 14 ou 15, caractérisé par le fait que le réglage de la pression exerce une action corrective en cas changement de pression dû à une fuite, à un changement de température du système hydraulique ou à un changement de la pression extérieure.

17. Mécanisme de changement de vitesse selon l'une des revendications 14 à 16, caractérisé par le fait que le réglage de la pression s'effectue automatiquement ou arbitrairement.

18. Mécanisme de changement de vitesse selon l'une des revendications 14 à 17, caractérisé par le fait que le dispositif hydraulique agit ensemble avec un dispositif de réglage du volume (38) lequel présente un transmetteur de parcours (41) synchronisé avec le transmetteur de parcours (47) d'un dispositif de comparaison du volume (44), lequel, en cas de changement de son volume en fonction d'un paramètre, provoque une modification analogue du volume du dispositif hydraulique et préserve une pression minimale.

19. Mécanisme de changement de vitesse selon la revendication 18, caractérisé par le fait que les transmetteurs de parcours respectifs sont des pistons (40, 46) ou des tiges de piston (41, 47) de cylindres de travail (39, 45) du dispositif de réglage du volume (38) ou du dispositif de comparaison du volume (44), que les deux transmetteurs de parcours sont couplés pour leur course longitudinale et qu'ils agissent contre la même force de rappel (butée 42, ressort 43), de sorte qu'un déplacement du transmeteur de parcours du dispositif de comparaison du volume (44) entraîne un déplacement correspondant du transmetteur de parcours du dispositif de réglage du volume (38).

20. Mécanisme de changement de vitesse selon la revendication 18 ou 19, caractérisé par le fait
- que le cylindre capteur (48) et le cylindre récepteur (49) sont conçus en tant que cylindres de travail à double effet,
- que les deux espaces de travail de ces cylindres de travail (48, 49) sont reliés aux espaces de travail correspondants par des conduites hydrauliques parallèles (50, 51),
- que l'une de ces conduites hydrauliques (50) est reliée au dispositif de réglage du volume (54, 56), et que l'autre conduite hydraulique (50) est reliée au dispositif de comparaison du volume (55, 57).

21. Mécanisme de changement de vitesse selon la revendication 20, caractérisé par le fait que les deux conduites hydrauliques (50, 51) sont reliées l'une à l'autre par une conduite de court-circuit (62) et que cette conduite de court-circuit peut être réglée par une soupape (63) servant à compenser le volume.
